Europäisches Patentamt

European Patent Office

Office européen des brevets

(11) Veröffentlichungsnummer: **0 315 128**
**B1**

(12) **EUROPÄISCHE PATENTSCHRIFT**

(45) Veröffentlichungstag der Patentschrift:
12.09.90

(51) Int. Cl.⁵: **B60K 20/04**

(21) Anmeldenummer: 88118204.2

(22) Anmeldetag: 02.11.88

(54) Halterung mit einem Klemmrahmen zur Befestigung eines Schalthebelbalges.

(30) Priorität: 06.11.87 DE 3737702

(43) Veröffentlichungstag der Anmeldung:
10.05.89 Patentblatt 89/19

(45) Bekanntmachung des Hinweises auf die Patenterteilung:
12.09.90 Patentblatt 90/37

(84) Benannte Vertragsstaaten:
DE FR GB IT SE

(56) Entgegenhaltungen:
EP-A- 0 224 677
DE-A- 3 406 486
DE-C- 3 523 737
FR-A- 2 466 331
US-A- 4 522 081

(73) Patentinhaber: Adam Opel Aktiengesellschaft,
Bahnhofsplatz 1 Postfach 17 10,
D-6090 Rüsselsheim(DE)

(72) Erfinder: Renk, Rolf, Dipl.-Ing. (FH),
Karl-Ulrich-Strasse 13, D-6095 Ginsheim(DE)
Erfinder: Pakl, Josef, Breslauer Strasse 2,
D-6204 Taunusstein(DE)

(74) Vertreter: Bergerin, Ralf, Dipl.-Ing. et al, Adam Opel
Aktiengesellschaft Bahnhofplatz 1 Postfach 17 10,
D-6090 Rüsselsheim(DE)

## Beschreibung

Die Erfindung bezieht sich auf eine Halterung mit einem Klemmrahmen zur Befestigung eines Schalthebelbalges in einer Öffnung einer Wandfläche eines Kraftfahrzeugs, insbesondere einer Mittelkonsole, welche einen umlaufenden, nach außen gerichteten Profilbereich hat, über den der Schalthebelbalg mit seinem öffnungsseitigen Ende greift. Eine solche Halterung ist Gegenstand der DE-PS 34 06 486.

Der Schalthebelbalg nach dieser DE-PS 34 06 486 ist zugleich als nach oben hin offenes Ablagefach ausgebildet. Sein Klemmrahmen klemmt den unteren Bereich des Schalthebelbalges gegen den Rand der Öffnung der Mittelkonsole. Der Klemmrahmen hat deshalb zwei Funktionen. Er muß durch seine nach außen gerichtete Vorspannung einerseits sicherstellen, daß der Schalthebelbalg nicht nach oben zwischen dem Klemmrahmen und dem Rand der Öffnung herausrutschen kann, andererseits selbst in axialer Richtung ausreichend fest in der Öffnung verrastet sein, um nicht mitsamt dem Schalthebelbalg aus ihr nach oben hin herauszurutschen. In der Praxis sind diese beiden Erfordernisse nicht mit ausreichender Sicherheit zu verwirklichen, was insbesondere dann gilt, wenn der Schalthebelbalg kein einheitliches Formteil aus zum Beispiel Gummi oder Weichkunststoff ist, sondern aus Leder oder Kunstleder besteht und ein oder mehrere Nähte aufweist. Deshalb verbindet man überlicherweise den Schalthebelbalg durch Metallklammern oder durch Kleben mit dem Klemmrahmen und verklipst anschließend den Klemmrahmen in der Öffnung.

Das Einkleben eines Schalthebelbalges in einem Klemmrahmen erfordert viel Handarbeit bei der Montage und führt zu großen Streuungen bei der Klebequalität. Ein Verschmutzen des Schalthebelbalges durch Klebstoff kann nicht ausgeschlossen werden. Die Klebstoffdämpfe sind oftmals gesundheits- und umweltschädlich. Manche Kunststoffe die für den Klemmrahmen in Frage kommen, schließen ein Kleben gänzlich aus. Ein weiterer Nachteil des Klebens besteht darin, daß bei einer Beschädigung des Schalthebelbalges der Klemmrahmen mit ausgetauscht werden muß, so daß höhere Reparaturkosten entstehen.

Ähnlich nachteilig ist die Befestigung des Schalthebelbalges am Klemmrahmen mittels Klammern. Der Klemmrahmen muß hierzu mit einem umlaufenden Steg relativ weit in die Öffnung ragen, damit auf diesen Steg ein Tackerwerkzeug aufgesetzt werden kann und damit die Klammern von außen nicht sichtbar sind. Außerdem muß der Klemmrahmen aus einem für das Klammern nich zu harten oder spröden Material bestehen, wodurch er zum Verrasten mit der Öffnung weniger geeignet wird.

Der Erfindung liegt die Aufgabe zugrunde, eine möglichst einfach aufgebaute Halterung der eingangs genannten Art zu entwickeln, die ein Trennen des Schalthebelbalges vom Klemmring ermöglicht, den Schalthebelbalg jedoch auch bei größerer Beanspruchung oder bei ungünstiger Formgebung zuverlässig hält.

Diese Aufgabe wird erfindungsgemäß dadurch gelöst, daß der nach außen gerichtete Profilbereich zumindest in etwa im Querschnitt die Form eines zur Seite der Öffnung hin offenen U's hat, daß das öffnungsseitige Ende des Schalthebelbalges von außen her kommend um 180 Grad umgeschlagen in den u-förmigen Profilbereich eingeführt ist und daß der Schalthebelbalg im u-förmigen Profilbe reich durch einen Klemmkörper lösbar eingespannt ist.

Durch diese erfindungsgemäße Gestaltung wird der Faltenbalg nicht zwischen dem Klemmring und dem Rand der Öffnung eingeklemmt, sondern im Klemmring selbst. Dadurch kann man den Klemmring unabhängig von der Art seiner Verrastung mit der Öffnung so ausbilden, daß er die Funktion des Klemmens des Schalthebelbalges optimal erfüllt. Da das Klemmen des Schalthebelbalges schon vor dem Einsetzen in die Öffnung erfolgt, läßt sich dieser Arbeitsgang des Klemmens außerhalb des Kraftfahrzeugs durchführen, was diese Arbeit erleichtert und ein leichtes Kontrollieren der richtigen Klemmung ermöglicht. Weiterhin ist dank der Erfindung eine Trennung des Schalthebelbalges vom Klemmrahmen möglich, ohne eines der Teile zu zerstören oder zu beschädigen. In der Produktion ist eine maschinelle Montage möglich. Trotz dieser funktionellen Vorteile ist die Halterung insgesamt sehr einfach aufgebaut und deshalb kostengünstig herstellbar.

Konstruktiv besonders einfach ist es, wenn der Schalthebelbalg im Klemmrahmen gegen eine Innenfläche des u-förmigen Profilbereiches geklemmt ist.

Dieses Einklemmen kann auf sehr einfache Weise geschehen, wenn gemäß einer vorteilhaften Ausgestaltung der Erfindung der Klemmkörper als ein elastisches, von unten her in den Klemmrahmen einschiebbares Bauteil aus Kunststoff oder Gummi, insbesondere als ein geschlossener Federstahlring ausgebildet ist.

Besonders kostengünstig ist der Klemmkörper gestaltet, wenn er ein entsprechend der Länge des u-förmigen Profilbereiches von einem Profilstrang abgeschnittenes Profilstück ist.

Der Querschnitt des Klemmkörpers kann sehr unterschiedlich sein. Vorteilhaft ist es, wenn er kreisförmig ist. Er kann zur Erhöhung seiner Elastizität als Hohlprofil ausgebildet sein oder mit nach außen gerichteten Stegen gegen den umgeschlagenen Haltebereich des Schalthebelbalges und den u-förmigen Profilbereich anliegen.

Falls man die Verwendung eines separaten Bauteils als Klemmkörper vermeiden möchte, dann ist es gemäß einer anderen Ausbildung der Erfindung vorteilhaft, wenn der Klemmkörper durch einen in den u-förmigen Profilbereich hineingebogenen Endabschnitt des Klemmrahmens gebildet ist.

Der Endabschnitt wird in Klemmstellung besonders zuverlässig gehalten, wenn die Innenwandfläche des u-förmigen Profilbereiches des Klemmrahmens eine Längsrille aufweist, in der der hineingebogene Endabschnitt mit dem eingeklemmten Schalthebelbalg verrastet ist.

Für die Demontage des Klemmringes vom Schalthebelbalg ist es vorteilhaft, wenn im u-förmigen Profilbereich oberhalb des umgebogenen Endabschnittes Durchbrüche zum Einführen eines Werkzeugs zwecks Zurückbiegen des Endabschnittes vorgesehen sind.

Eine andere Möglichkeit, die Demontage des Klemmringes vom Schalthebelbalg zu erleichtern, besteht darin, daß am umgebogenen Endabschnitt ein im umgebogenen Zustand des Endabschnittes aus dem u-förmigen Profilbereich heraus nach außen weisender Stegabschnitt angeformt ist.

Eine besonders gute Klemmwirkung über den gesamten Bereich des Klemmkörpers läßt sich erreichen, wenn der umzubiegende Endabschnitt durch Einschnitte in mehrere Klemmbereiche unterteilt ist.

Falls der Schalthebelbalg besonders hohen Beanspruchungen ausgesetzt ist, dann kann man den umzubiegenden Endabschnitt mit gegen den Schalthebelbalg anlegbaren Krallen versehen.

Eine andere Ausgestaltung des Klemmkörpers, welche ganz besonders toleranzunempfindlich ist, besteht darin, daß der Klemmkörper zwei aufeinandergerichtete, in den u-förmigen Profilbereich weisende Klemmstege aufweist, zwischen denen der Haltebereich des Schalthebelbalges eingeklemmt ist.

Die Erfindung läßt zahlreiche Ausführungsformen zu. Zur weiteren Verdeutlichung ihres Grundprinzips sind mehrere davon in der Zeichnung dargestellt und werden nachfolgend beschrieben. Die Zeichnung zeigt in

Fig. 1 einen Längsschnitt durch eine Mittelkonsole eines Kraftfahrzeugs im Bereich eines Schalthebels und der erfindungsgemäßen Halterung des Schalthebelbalges,

Fig. 2 eine gegenüber Figur 1 vergrößerte Darstellung eines in Figur 1 mit X gekennzeichneten Bereiches,

Fig. 3 drei verschiedene Ausführungsformen eines Klemmkörpers der erfindungsgemäßen Halterung,

Fig. 4 eine der Figur 2 entsprechende Darstellung einer geänderten Ausführungsform der Halterung in einer den Schalthebelbalg nicht klemmenden Position,

Fig. 5 die Anordnung nach Figur 4 in einer den Schalthebelbalg klemmenden Position,

Fig. 6 eine perspektivische Darstellung eines Teilbereiches einer weiteren Ausführungsform des Klemmrahmens,

Fig. 7 eine der Figur 2 entsprechende Darstellung einer weiteren Ausführungsform der Halterung nach der Erfindung,

Fig. 8 eine der Figur 2 entsprechende Darstellung einer weiteren Ausführungsform der Halterung nach der Erfindung.

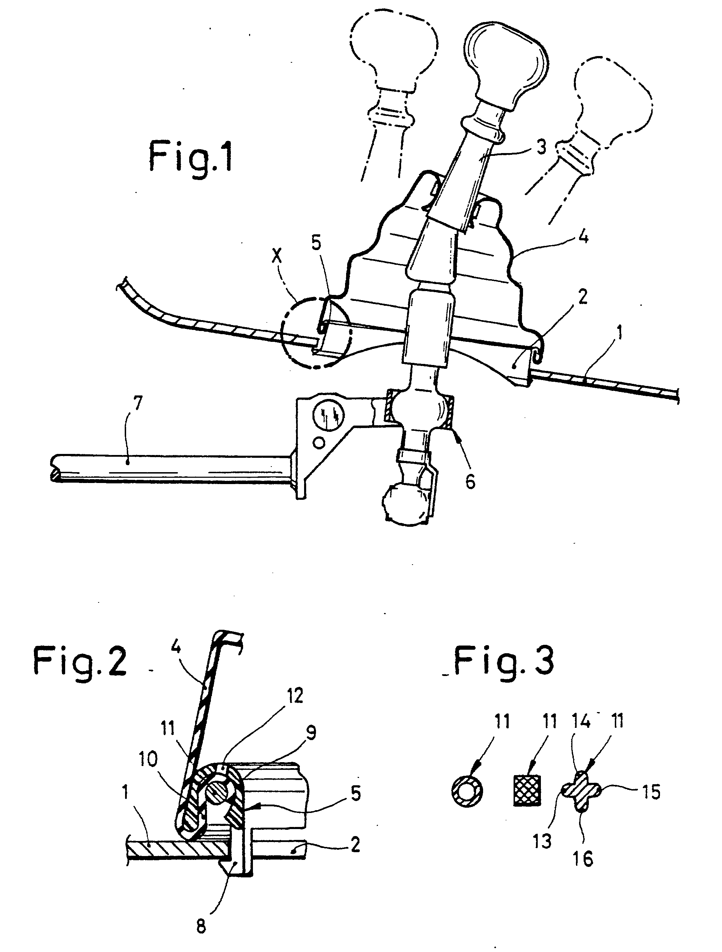

Die Figur 1 zeigt von einer Mittelkonsole eines Kraftfahrzeugs eine obere Wandfläche 1 mit einer Öffnung 2, durch die hindurch ein Schalthebel 3 nach oben geführt ist. Die Öffnung 2 muß relativ groß sein, damit der Schalthebel 3 die zum Anwählen und Schalten der Gänge erforderlichen Bewegungen ausführen kann. In der Zeichnung sind zur Verdeutlichung zwei in Fahrtrichtung liegende Endstellungen des Schalthebels 3 strichpunktiert dargestellt.

Die Öffnung 2 ist durch einen Schalthebelbalg 4 abgedeckt, der sich nach oben hin am Schalthebel 3 anlegt und mit seinem unteren Ende mittels eines Klemmrahmens 5 in der Öffnung 2 befestigt ist. Unterhalb der Öffnung 2 ist in Figur 1 eine Schaltmechanik 6 dargestellt, mit der je nach Bewegung des Schalthebels 3 eine Schaltstange 7 verdreht oder axial verschoben werden kann. Wichtig für die Erfindung ist die Art der durch den Klemmrahmen 5 gebildeten Halterung des Schalthebelbalges 4 in der Öffnung 2. Eine erste Ausführungsform einer solchen Halterung ist in Figur 2 dargestellt.

Die Figur 2 zeigt, daß der Klemmrahmen 5 mittels Rastfüßen 8 in der Öffnung 2 verrastet ist und mit einem zur oberen Wandfläche 1 hin offenen u-förmigen Profilbereich 9 über den Rand der Öffnung 2 greift. Die Rastfüße 8 sind nur an einigen Stellen des Klemmrahmens vorgesehen. Der Schalthebelbalg 4 ist von außen her über den Klemmrahmen 5 geführt und verläuft dann mit einem um 180 Grad umgeschlagenen Haltebereich 10 im Inneren des u-förmigen Profilbereiches 9. Ein im Querschnitt kreisförmiger Klemmkörper 11 aus einem elastischen Material, beispielsweise Gummi, ist von unten her in den u-förmigen Bereich 9 eingesetzt und klemmt den Haltebereich 10 des Schalthebelbalges 4 gegen die Innenwandung des u-förmigen Bereiches 9, so daß der Schalthebelbalg 4 im Klemmrahmen 5 zuverlässig gehalten ist. Ein Durchbruch 12 im oberen Bereich des Klemmrahmens 5 ermöglicht es, mit einem Werkzeug den umgeschlagenen Haltebereich 10 des Schalthebelbalges 4 mit dem Klemmkörper 11 aus dem Klemmrahmen 5 herauszudrücken, wenn der Schalthebelbalg 4 ersetzt werden soll.

Die Figur 3 zeigt drei verschiedene Ausführungsformen des in den u-förmigen Profilbereich 9 einzusetzenden Klemmkörpers 11. Im linken Bildteil der Figur 1 ist er als rohrförmiges Hohlprofil, im mittleren Bildteil als im Querschnitt quadratisches Vollprofil und im rechten Bildteil als sternförmiges Profil mit vier nach außen gerichteten Stegen 13, 14, 15, 16 ausgebildet.

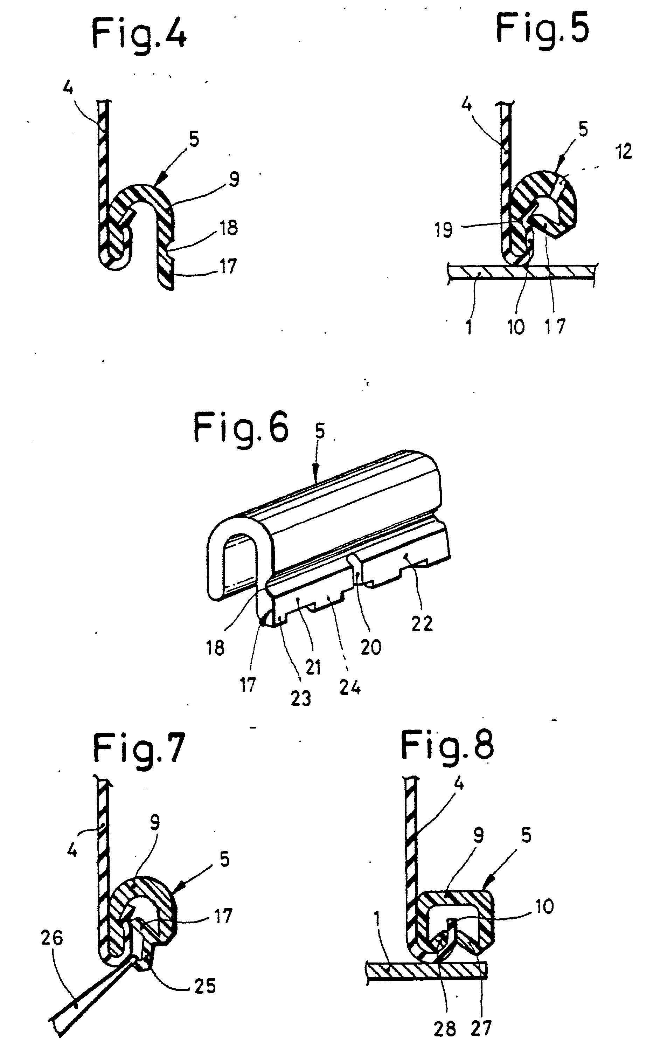

Bei der Ausführungsform gemäß den Figuren 4 und 5 ist am öffnungsinnenseitigen Schenkel des u-förmigen Bereiches 9 des Klemmrahmens 5 ein nach unten weisender Endabschnitt 17 angeformt. Durch eine Auskehlung 18 ist es möglich, diesen Endabschnitt 17 in das Innere des u-förmigen Profilbereiches 9 hineinzuklappen, bis daß er mit Vorspannung gegen den umgeschlagenen Haltebereich 10 des Schalthebelbalges 4 anliegt (Figur 5).

Eine im außenseitigen Schenkel des Klemmrahmens 5 vorgesehene Längsrille 19 dient dazu, den umgeklappten Endabschnitt 17 in seiner Endstellung zu verrasten.

Die perspektivische Darstellung gemäß Figur 6 zeigt, daß der Endabschnitt 17 durch Einschnitte 20 in mehrere Klemmbereiche 21, 22 unterteilt sein kann. Weiterhin sind in Figur 6 an der Unterkante der Klemmbereiche 21, 22 Krallen 23, 24 gezeigt, die sich im umgeklappten Zustand gegen den umgeschlagenen Haltebereich 10 des Schalthebelbalges 4 abstützen und diesen dadurch noch besser halten.

Die Ausführungsform gemäß Figur 7 unterscheidet sich von der nach Figur 5 dadurch, daß am in Figur 7 umgeklappt dargestellten Endabschnitt 17 ein in dieser Stellung nach unten weisender Stegabschnitt 25 angeformt ist, der es ermöglicht, von unten her mit einem Werkzeug 26 den Endabschnitt 17 aus dem u-förmigen Profilbereich 9 herauszuschwenken, damit der Schalthebelbalg 4 vom Klemmrahmen 5 freikommt.

Bei der Ausführungsform gemäß Figur 8 weist der Klemmrahmen 5 zwei aufeinandergerichtete, in den u-förmigen Profilbereich 9 hinein gerichtete Klemmstege 27, 28 auf, zwischen denen der umgeschlagene Haltebereich 10 des Schalthebelbalges 4 eingeklemmt ist.

## Patentansprüche

1. Halterung mit einem Klemmrahmen zur Befestigung eines Schalthebelbalges in einer Öffnung einer Wandfläche eines Kraftfahrzeugs, insbesondere einer Mittelkonsole, welche einen umlaufenden, nach außen gerichteten Profilbereich hat, über den der Schalthebelbalg mit seinem öffnungsseitigen Ende greift, dadurch gekennzeichnet, daß der nach außen gerichtete Profilbereich (9) zumindest in etwa im Querschnitt die Form eines zur Seite der Öffnung hin offenen U's hat, daß das öffnungsseitige Ende des Schalthebelbalges (4) von außen her kommend um 180 Grad umgeschlagen in den u-förmigen Profilbereich (9) eingeführt ist und daß der Schalthebelbalg (4) im u-förmigen Profilbereich (9) durch einen Klemmkörper (11, 17; 27, 28) lösbar eingespannt ist.

2. Halterung nach Anspruch 1, dadurch gekennzeichnet, daß der Schalthebelbalg (4) im Klemmrahmen (5) gegen eine Innenfläche des u-förmigen Profilbereiches (9) geklemmt ist.

3. Halterung nach Anspruch 2, dadurch gekennzeichnet, daß der Klemmkörper (11) als ein elastisches, von unten her in den Klemmrahmen (5) einschiebbares Bauteil aus Kunststoff, oder als ein geschlossener Federstahlring ausgebildet ist.

4. Halterung nach den Ansprüchen 2 oder 3, dadurch gekennzeichnet, daß der Klemmkörper (11) ein entsprechend der Länge des u-förmigen Profilbereiches (9) von einem Profilstrang abgeschnittenes Profilstück ist.

5. Halterung nach einem oder mehreren der vorangehenden Ansprüche, dadurch gekennzeichnet, daß der Klemmkörper (11) kreisförmigen Querschnitt hat.

6. Halterung nach einem oder mehreren der vorangehenden Ansprüche, dadurch gekennzeichnet, daß der Klemmkörper (11) ein Hohlprofil ist.

7. Halterung nach einem oder mehreren der vorangehenden Ansprüche, dadurch gekennzeichnet, daß der Klemmkörper (11) mit nach außen gerichteten Stegen (13 - 16) gegen den umgeschlagenen Haltebereich (10) des Schalthebelbalges (4) und den u-förmigen Profilbereich (9) anliegt.

8. Halterung nach Anspruch 1, dadurch gekennzeichnet, daß der Klemmkörper durch einen in den u-förmigen Profilbereich (9) hineingeklappten Endabschnitt (17) des Klemmrahmens (5) gebildet ist.

9. Halterung nach Anspruch 8, dadurch gekennzeichnet, daß die Innenwandfläche des u-förmigen Profilbereichs (9) des Klemmrahmens (5) eine Längsrille (19) aufweist, in der der hineingeklappte Endabschnitt (17) mit dem eingeklemmten Schalthebelbalg (4) verrastet ist.

10. Halterung nach den Ansprüchen 8 oder 9, dadurch gekennzeichnet, daß im u-förmigen Profilbereich (9) oberhalb des umgeklappten Endabschnittes (17) Durchbrüche (12) zum Einführen eines Werkzeugs zwecks Zurückklappen des Endabschnittes (17) vorgesehen sind.

11. Halterung nach einem oder mehreren der Ansprüche 8, 9 oder 10, dadurch gekennzeichnet, daß am umgebogenen Endabschnitt (17) ein im umgebogenen Zustand des Endabschnittes (17) aus dem u-förmigen Profilbereich (9) heraus nach außen weisender Stegabschnitt (25) angeformt ist.

12. Halterung nach einem oder mehreren der Ansprüche 8 - 11, dadurch gekennzeichnet, daß der umzubiegende Endabschnitt (17) durch Einschnitte (20) in mehrere Klemmbereiche (21, 22) unterteilt ist.

13. Halterung nach einem oder mehreren der Ansprüche 8 - 12, dadurch gekennzeichnet, daß der umzubiegende Endabschnitt (17) gegen den Schalthebelbalg (4) anlegbare Krallen (23, 24) hat.

14. Halterung nach Anspruch 1, dadurch gekennzeichnet, daß der Klemmkörper zwei aufeinandergerichtete, in den u-förmigen Profilbereich (9) weisende Klemmstege (27, 28) aufweist, zwischen denen der Haltebereich (10) des Schalthebelbalges (4) eingeklemmt ist.

## Claims

1. Mounting with a clamping frame for fixing gear lever bellows in an opening of a wall surface of a motor vehicle, in particular a centre console, which has a peripheral, outwardly directed profile region over which the gear lever bellows engage by their end on the opening side, characterised in that the outwardly directed profile region (9) at least approximately in cross-section has the shape of a U open towards the side of the opening, that the end of the gear lever bellows (4) near the opening is turned through 180 degrees and introduced into the U-shaped profile region (9) from the outside and that the gear lever bellows (4) are releasably clamped in the U-shaped profile region (9) by a clamping body (11, 17; 27, 28).

2. Mounting according to claim 1, characterised in that the gear lever bellows (4) are clamped in the clamping frame (5) against an inner surface of the U-shaped profile region (9).

3. Mounting according to claim 2, characterised in that the clamping body (11) is constructed as an elastic component made of plastic which can be inserted in the clamping frame (5) from below, or as a closed spring steel ring.

4. Mounting according to claim 2 or 3, characterised in that the clamping body (11) is a profile piece cut from a profile strip according to the length of the U-shaped profile region (9).

5. Mounting according to one or more of the preceding claims, characterised in that the clamping body (11) has a circular cross-section.

6. Mounting according to one or more of the preceding claims, characterised in that the clamping body (11) is a hollow profile.

7. Mounting according to one or more of the preceding claims, characterised in that the clamping body (11) abuts by outwardly directed webs (13–16) against the turned-over retaining region (10) of the gear lever bellows (4) and the U-shaped profile region (9).

8. Mounting according to claim 1, characterised in that the clamping body is formed by an end section (17) of the clamping frame (5) which is bent into the U-shaped profile region (9).

9. Mounting according to claim 8, characterised in that the inner wall surface of the U-shaped profile region (9) of the clamping frame (5) comprises a longitudinal groove (19) in which the inturned end section (17) is latched to the clamped gear lever bellows (4).

10. Mounting according to claim 8 or 9, characterised in that in the U-shaped profile region (9) above the bent end section (17), apertures (12) are provided for introducing a tool for the purpose of bending back the end section (17).

11. Mounting according to one or more of claims 8, 9 or 10, characterised in that on the bent end section (17) is integrally formed a web section (25) which points outwards out of the U-shaped profile region (9) in the bent position of the end section (17).

12. Mounting according to one or more of claims 8–11, characterised in that the end section (17) to be bent over is divided by notches (20) into several clamping regions (21, 22).

13. Mounting according to one of more of claims 8–12, characterised in that the end section (17) to be bent over has claws (23, 24) which can be applied to the gear lever bellows (4).

14. Mounting according to claim 1, characterised in that the clamping body comprises two clamping webs (27, 28) which are directed towards each other and point into the U-shaped profile region (9) and between which is clamped the retaining region (10) of the gear lever-bellows (4).

**Revendications**

1. Support comprenant un cadre de serrage pour la fixation d'un soufflet de levier de changement de vitesse dans une ouverture d'une surface de paroi d'un véhicule automobile, en particulier d'une console médiane, lequel support présente une zone profilée circulaire dirigée vers l'extérieur et que le soufflet de levier de changement de vitesse coiffe par son extrémité située du côté de l'ouverture, caractérisé par le fait que la zone profilée (9) dirigée vers l'extérieur a une section transversale sensiblement en forme de U ouvert du côté de l'ouverture, que l'extrémité du soufflet (4) du levier de changement de vitesse qui est située du côté de l'ouverture est introduite à partir de l'extérieur puis relevée de 180° dans la zone (9) profilée en forme de U et que le soufflet (4) est coincé de façon amovible dans la zone (9) profilée en forme de U par un organe de blocage (11, 17; 27, 28).

2. Support selon la revendication 1, caractérisé par le fait que le soufflet (4) du levier de changement de vitesse dans le cadre (5) est coincé contre une surface intérieure de la zone (9) profilée en forme de U.

3. Support selon la revendication 2, caractérisé par le fait que l'organe de blocage (11) est réalisé sous la forme d'un élément de construction élastique en matière plastique engagé par en-dessous dans le cadre de serrage (5), ou sous la forme d'un anneau fermé en acier à ressort.

4. Support selon la revendication 2 ou 3, caractérisé par le fait que l'organe de blocage (11) est une pièce profilée découpée dans un boin profilé conformément à la longueur de la zone (9) profilée en forme de U.

5. Support selon l'une ou plusieurs des revendications précédentes, caractérisé par le fait que l'organe de blocage (11) a une section transversale circulaire.

6. Support selon l'une ou plusieurs des revendications précédentes, caractérisé par le fait que l'organe de blocage (11) est un profilé creux.

7. Support selon l'une ou plusieurs des revendications précédentes, caractérisé par le fait que l'organe de blocage (11) vient s'appliquer par des nervures (13–16) dirigées vers l'extérieur contre la zone de retenue relevée (10) du soufflet (4) du levier de changement de vitesse et la zone (9) profilée en forme de U.

8. Support selon la revendication 1, caractérisé par le fait que l'organe de blocage est formé par une section d'extrémité (17) du cadre de serrage (5) qui est rabattue dans la zone (9) profilée en forme de U.

9. Support selon la revendication 8, caractérisé par le fait que la surface de paroi intérieure de la zone (9) profilée en forme de U du cadre de serrage (5) comporte une rainure longitudinale (19) dans laquelle la section d'extrémité rabattue (17) vient s'encliqueter avec le soufflet (4) qu'elle maintient coincé à l'intérieur.

10. Support selon la revendication 8 ou 9, caractérisé par le fait que des perçages (12) pour l'introduction d'un outil servant à ramener en arrière la section d'extrémité (17) sont prévus dans la zone (9) profilée en forme de U au-dessus de la section d'extrémité rabattue (17).

11. Support selon l'une ou plusieurs des revendications 8, 9 ou 10, caractérisé par le fait que sur la section d'extrémité rabattue (17) est façonné d'une seule pièce un appendice (25) dirigé vers l'extérieur et sortant de la zone (9) profilée en forme de U à l'état rabattu de la section d'extrémité (17).

12. Support selon l'une ou plusieurs des revendications 8–11, caractérisé par le fait que la section d'extrémité à rabattre (17) est subdivisée en plusieurs zones de serrage (21, 22) par des entailles (20).

13. Support selon l'une ou plusieurs des revendications 8–12, caractérisé par le fait que la section d'extrémité à rabattre (17) comporte des griffes (23, 24) pouvant venir s'appliquer contre le soufflet (4) du levier de changement de vitesse.

14. Support selon la revendication 1, caractérisé par le fait que l'organe de blocage comporte deux nervures de serrage (27, 28) dirigées l'une vers l'autre, faisant saillie dans la zone (9) profilée en forme de U et entre lesquelles est coincée la zone de retenue (10) du soufflet (4) du levier de changement de vitesse.

EP 0 315 128 B1

Fig.1

Fig.2

Fig.3

# Fig.4

# Fig.5

# Fig.6

# Fig.7

# Fig.8